# EUROPEAN PATENT SPECIFICATION

(11) **EP 1 838 147 B1**
(45) Date of publication and mention of the grant of the patent: **31.07.2013**
(21) Application number: 06701455.5
(22) Date of filing: 19.01.2006
(51) Int. Cl.: A01K 61/00

(54) **METHOD FOR PREVENTING ABNORMAL BEHAVIOR OF TUNA**
VERFAHREN ZUR VERHINDERUNG ANOMALEN VERHALTENS VON THUNFISCHEN
PROCEDE PERMETTANT D'EMPECHER UN COMPORTEMENT ANORMAL CHEZ LES THONS

(30) Priority: 21.01.2005 JP 2005014356; 21.01.2005 JP 2005014358
(43) Date of publication of application: 03.10.2007
(73) Proprietor: Kinki University, Higashiosaka-shi Osaka 577-8502 (JP)
(72) Inventor: ISHIBASHI, Yasunori, Higashiosaka-shi, Osaka, 5778502 (JP); MIYASHITA, Shigeru, Higashiosaka-shi, Osaka, 5778502 (JP); SAWADA, Yoshifumi, Higashiosaka-shi, Osaka, 5778502 (JP); OKADA, Tokihiko, Higashiosaka-shi, Osaka, 5778502 (JP); KURATA, Michio, Higashiosaka-shi, Osaka, 5778502 (JP)
(74) Representative: Vossius & Partner
(86) International application number: PCT/JP2006/301176
(87) International publication number: WO 2006/078061

(56) References cited:
- JP-U- 5 034 854
- US-A- 4 271 788
- PATENT ABSTRACTS OF JAPAN vol. 018, no. 296 (C-1209), 6 June 1994 (1994-06-06) & JP 06 062700 A (TOKAI UNIV), 8 March 1994 (1994-03-08)
- PATENT ABSTRACTS OF JAPAN vol. 2003, no. 12, 5 December 2003 (2003-12-05) -& JP 2004 298059 A (JAPAN SCIENCE & TECHNOLOGY AGENCY), 28 October 2004 (2004-10-28)

## Description

### Technical Field

The present invention relates to a method for preventing the occurrence of abnormal behavior such as cannibalism, fright behavior, and collision death during rearing, storage (fattening up) or transportation of tuna.

### Background Art

In the conventional seed production of tuna, cannibalism and fright behavior occur due to various causes, which results in death of a large number of tuna in juvenile and young adult fish stages. In addition, at the same time of fright behavior, or independently, sometimes, tuna bring about burst swimming toward a rearing water tank wall or a rearing net cage wall to cause collision death. Thus, a survival rate during rearing and a survival rate at the time of transportation of tuna in juvenile and young adult fish stages are extremely low, and it therefore is very difficult to conduct the seed production of tuna efficiently on a mass-production scale unless a method for preventing the occurrence thereof is developed.

For example, JP 5-7463 A and JP 2003-274793 A propose developed.

For example, JP 5-7463 A and JP 2003-274793 A propose a method for preventing cannibalism during rearing the Crustacea. However, as for tuna, no article proposing a method for preventing cannibalism, etc. is found. JP 06-062700, JP 2004-298059 and US 4,271,788 describe means and methods for improving feeding of tuna by illumination. Further, JP 9-74975 A discloses an electric apparatus for removing marine organisms adhered to a net cage for rearing fish, which minimizes the necessity of change of the net and, at the same time, avoids collision of fish including tuna with the net by a lighting means of the apparatus. However, there is no teaching or suggestion of the control of visual stimuli of fish in this document. Furthermore, Journal of The World Aquaculture Society, Vol. 31, No. 4, pp. 632-639 (December 2000) is a report relating to collision death during rearing tuna, and discloses that all-night lighting at low illumination (one 10-W incandescent light bulb hung 70 cm above a water surface at the center of a tank) is effective for preventing collision death in an indoor experiment. However, it does not teach or suggest the control of visual stimuli. JP 5-34854 A discloses the provision of an at least 2 colour pattern sheet on a wall surface of a fish rearing tank for preventing collision with said wall surface.

### Disclosure of the Invention

The main object of the present invention is to provide a method for effectively preventing the occurrence of abnormal behavior such as cannibalism, fright behavior, and collision death of tuna during the seed production, and additionally, during other rearing, storage or transportation of tuna.

The present inventors have studied the influence of visual stimuli on tuna intensively with consideration that abnormal behavior would occur due to certain common causative external stimuli, and giving attention to visual stimuli as the causative external stimuli for improving a survival rate during the seed production of tuna, thereby achieving the above object.

First, in order to reveal a cause of cannibalism, fright behavior and collision death, juvenile tuna were placed in various water tanks with different combinations of illumination and colors, respectively, and examined fright behavior rates, survival rates, cortisol levels as the hormone showing a stress state of fish, and the like to study the influence of illumination, color of a water tank, brightness, reflected light, and the like. As a result, it has been found that the occurrence of the abnormal behavior can be prevented by controlling visual stimuli. Next, for developing a method for preventing the occurrence of abnormal behavior such as fright, buffering equipment and a buffering material to be placed in water for alleviating visual stimuli were used to study their effects. In addition, fish were actually transported by using a visual sense-controlling water tank developed by the present inventors to confirm its effect.

Further, while the abnormal behavior is considered to be caused by certain common external stimuli, its occurrence tends to be more frequent at night and dawn. Then, in order to improve a survival rate, the present inventors gave attention to a light and dark cycle and illumination as causes of fright behavior and collision death, and reared juvenile tuna in rearing environments of different day-length time and illumination, respectively to examine survival rates, or the like, thereby revealing the influence of a light and dark cycle and illumination upon rearing on mortality of juvenile tuna. Furthermore, while the occurrence of collision was assessed by X-rays of fish after rearing for a certain period of time, stress states were judged from stress hormone levels of fish.

The present invention has been completed based on these examinations and studies. That is, the present invention provides a method for preventing the occurrence of fright behavior or collision death of tuna in juvenile or young adult fish stage according to independent claim 1. Preferred embodiments are set out in the dependent claims 2 to 4. The present invention further provides a method for preventing the occurrence of collision death of tuna in juvenile or young adult fish stage according to independent claim 5.

### Effects of the Invention

According to the present invention, the following findings are provided.
(i) Although tuna show fright behavior, high mortality and a stress state with respect to a colored substance or tank in white, yellow, black, or the like under specific illumination conditions, they do not show such behavior in a transparent rearing water tank.
(ii) No reaction is shown at all even when a colored substance is present outside a transparent rearing water tank without a liquid between the tank and the substance. When looking at the outside from the inside of a rearing water tank, a substance outside the tank can be seen by casting an eye in the vertical direction toward the wall or bottom surface, but the outside cannot be seen from diagonal directions because of reflection by the wall or bottom surface like a mirror. The visual axis of tuna is not always in the front median line direction. Due to a wide single eye field of sight of tuna, the focus adjustment with respect to a stationary substance may be insufficient. It is considered that tuna cannot see a substance beyond a transparent rearing water tank sufficiently due to a mirror effect as mentioned above in a transparent rearing water tank. To the contrary, in a rearing water tank equipped with aluminum sheet or the like set on the tank side wall and bottom surfaces, reflected light is extremely increased, and tuna are frightened by strong light from the side wall and bottom surfaces to cause significant fright behavior. That is, fright behavior and collision death of tuna can be prevented by setting a visual stimulus-buffering material appropriately allowing transmission of light in a rearing water tank to outside the tank as well as partially reflecting light in diagonal directions.
(iii) The occurrence of cannibalism, fright behavior, collision death, or the like of bluefin tuna can be partially prevented by introducing colored fine particles such as fresh water chlorella and nanochloropsis into a rearing tank for alleviating the influence of colored substances present on the wall and bottom surfaces of the rearing tank.
(iv) The occurrence of fright behavior and collision death can be prevented by using a rearing water tank, wherein the visual stimulus-buffering material of the above (ii) is introduced, when transporting tuna.
(v) In the large scale facilities, collision with a wall surface of a rearing water tank or a net cage surface of tuna can be prevented by setting a material and/or pattern stimulating their visual sense on the tank wall surface or the net cage surface so as to prevent the tuna from approaching to the tank wall surface or the net cage surface.
(vi) The occurrence of fright behavior and collision death can be prevented by using the large scale rearing water tank, wherein the visual stimulus material and/or design of the above (v) is introduced, when transporting tuna.

Thus, according to the present invention, the occurrence of abnormal behavior such as cannibalism, fright behavior and collision death of tuna can be prevented by various visual stimulus-controlling means.

Further, the following findings are also provided.
(vi) Fright behavior or collision death of tuna is liable to occur by shifting dark conditions or a light and dark cycle.
(vii) The occurrence of collision death can be alleviated by setting 24 hour lighting conditions, i.e., to continue lighting for 24 hours.
(viii) The effect of alleviating collision death cannot be achieved sufficiently unless illumination is at least about 150 lx on the surface of water, even when 24 hour lighting conditions are employed.

The practicality of the 24 hour lighting conditions at least about 150 lx has been confirmed by the fact that the same results as those in an experiment using a 3 ton rearing water tank are obtained in an experiment using a 30 ton production water tank. Further, although this experiment has been carried out for about 10 days, there is a collision death occurrence period of about 50 days or more in practice. Therefore, the preventive effect thereof is significant. Since this rearing method under 24 hour lighting conditions at least about 150 lx does not provide a large stress to tuna, the method is extremely effective for production rearing in a period when collision death is liable to occur, or improving a survival rate at the time of transportation. Furthermore, since a survival rate is lowered when a period under low illumination conditions is extended, a survival rate can be improved by lighting or the like even under natural day-length conditions to reduce a period at low illumination such as about 15 to 150 lx.
(ix) The occurrence of collision death can be also alleviated by setting 24 hour lighting conditions by means of underwater light.

### Brief Description of the Drawings

Fig. 1 is a graph showing the results of the transportation test in Example 5 hereinafter.
Fig. 2 is a graph showing the results of the test for abnormal mortality preventive effect during rearing with lighting in Example 11 hereinafter.
Fig. 3 is a graph showing the results of the test for an abnormal mortality preventive effect of a substance (body) having an avoidance pattern set on a rearing net cage in Example 12 hereinafter.
Fig. 4 is a graph showing the results of the test for of the influence of illumination on a survival rate in Example 13 hereinafter.
Fig. 5 is a graph showing the results of the test for influence of illumination on a survival rate in Example 14 hereinafter.
Fig. 6 is a graph showing the results of the test for the influence of illumination on a survival rate in Example 15 hereinafter.

### Best Mode for Carrying Out the Invention

The present invention can be used for rearing, storage and transportation of any kinds of tuna and Marlin. In particular, it can be used preferably for the Pacific bluefin tuna (*Thunnus orientalis*), the northern bluefin tuna (*Thunnus thynnus*), the southern bluefin tuna (*Thunnus maccoyii*), Bigeye-tuna (*Thunnus obesus*), Yellowfin Tuna (*Thunnus albacares*), albacore (*Thunnus alalunga*), longtail tuna (*Thunnus tonggol*), blackfin tuna (*Thunnus atlanticus*) and the like. It is used preferably for tuna of juvenile or young adult fish stage so as to produce seed stock efficiently on a mass-production scale with effectively preventing the occurrence of abnormal behavior such as cannibalism, fright behavior and collision death.

The control of visual stimuli of tuna in the present invention includes both alleviation and, to the contrary, intensification of visual stimuli. The present invention is characterized in that tuna are reared, stored or transported while maintaining the tuna in a visual stimulus-controlling environment, thereby preventing the occurrence of the abnormal behavior. As for other conditions, those conventionally employed in rearing (for example, the seed production, cultivation, etc.), storage (for example, catching, growout culture, etc.), and transportation of tuna can be used.

As an embodiment of the present invention, the tuna are maintained in a visual stimulus-alleviating environment. Examples of a means for alleviation of the visual stimuli include (a) making wall and bottom surfaces of a rearing water tank coming with contact with the environment transparent but not as a means according to the invention, (b) setting a visual stimulus-buffering material through which light transmits partially in both straight and diagonal directions, (c) maintaining the tuna in the presence of colored fine particles in the environment, (d) controlling the fluctuation in illumination of the environment, and a combination thereof.

The means (a) is to make wall and bottom surfaces of a rearing water tank coming with contact with the environment transparent. As mentioned above, although tuna show fright behavior, high mortality and a stress state with respect to a colored substance in white, yellow, black, or the like under specific illumination conditions, they do not show such behavior in a transparent rearing water tank. Further, no reaction is shown at all even when a colored substance is present outside a transparent rearing water tank without a liquid between the tank and the substance. Specifically, visual stimuli of tuna can be alleviated by using a transparent rearing water tank made of glass, transparent synthetic resin sheets such as so-called vinyl sheets, or the like.

The means (b) is to set a visual stimulus-buffering material through which light transmits partially in both straight and diagonal directions, thereby preventing fright behavior and collision death of tuna. Examples of the visual stimulus-buffering material include a transparent buffering sheet material with one or a plurality of air encapsulated portions known as Air Cap, Puchi-Puchi type, etc., a two-way (or one-way) mirror, or the like. Even in case of a colored water tank, visual stimuli can be alleviated by setting such a material inside the tank so that, for example, the tank is equipped with the material set on the wall surface of the tank.

The means (c) is to place an appropriate amount of colored fine particles such as fresh water chlorella and nanochloropsis in an environment for alleviating the influence of colored substances present on the wall and bottom surfaces of a rearing tank.

The means (d) is to alleviate visual stimuli by rearing, storing or transporting tuna with maintaining them in an environment under lighting at illumination (illumination on the water surface or rearing water) of about 150 lx or more, thereby preventing the occurrence of the abnormal behavior. A lighting method is not particularly limited, and the lighting can be conducted, for example, by lighting equipment set or hung above the water surface of a rearing tank or a net cage. It has been confirmed the same effect can be obtained by lighting equipment set in water.

According to another embodiment of the means (d), to the contrary, an illumination range which tuna dislike (avoidance-illumination range) is avoided. Specifically, tuna dislike the low illumination range of 0 lx to about 150 lx at dawn. On the other hand, abnormal behavior such as fright reaction also occurs due to the sudden rise of illumination. Then, under the natural day-length with sunlight, when illumination becomes about 10 lx or more, lighting is conducted little by little so as to raise the illumination to at least about 150 lx more quickly than the natural illumination rise, thereby avoiding the avoidance-illumination range of tuna. This method for preventing the occurrence of the abnormal behavior is also effective.

Since the illumination of at least about 150 lx used herein means that of a water surface area, in case of using a deep water tank or net cage, illumination should be raised to more than about 150 lx, when lighting is conducted by lighting equipment set above the water surface of a rearing tank or a net cage.

It has also been confirmed that the same effect can be obtained even when the illumination is somewhat lower than about 150 lx. The upper limit of the illumination is not specifically limited, but usually, about 10,000 lx, preferably about 5,000 lx.

According to another embodiment, on the contrary, visual stimuli of tuna are utilized. Specifically, in case of a large scale rearing water tank or a large scale net cage, a material for stimulating the visual sense of tuna such as a colored substance which frightens tuna, a substance or material having an avoidance pattern, a light reflection plate according to the invention, or the like is set on the wall and bottom surfaces and net surface thereof, or surfaces of other obstacles for preventing tuna from injury or death due to collision therewith. In a large scale water tank, it is also effective for the collision prevention to provide the wall surface with a color or a pattern which frightens tuna. The size and shape of these material, substance and pattern are not specifically limited.

There may be provided a method for alleviating visual stimuli of tuna, wherein tuna is adapted to visual stimuli. Since the reaction of tuna to visual stimuli becomes more significant in juvenile stage, tuna is adapted to a frightening colored substance or a frightening pattern which is characteristic of a particular rearing water tank or a net cage from their egg and larva stages. This method is effective rather in case of rearing, storing or transporting in a small scale rearing water tank or net cage.

The present invention prevents the occurrence of abnormal behavior such as cannibalism, fright behavior, and collision death in rearing, storage or transportation of tuna by the above-mentioned means and embodiments alone or in an appropriate combination thereof. Further, the rearing, storing and transporting methods comprising such abnormal behavior preventive measures are also in the scope of the present invention.

The following Examples further illustrate the present invention in detail, but are not construed to limit the scope of the present invention.

The determination of the cortisol level in each Example was carried out as follows.

The cortisol level was determined by an enzyme immunoassay (EIA). Namely, a competition reaction was carried out by adding an ether extract of a sample and a HRP labeled cortisol to a well of a 96 well micro titer plate containing an immobilized cortisol specific antibody (rabbit cortisol antibody, FKA404-E, produced by Cosmo bio). After washing and removing unbound cortisol, color was developed by addition of a TMB substrate solution and the absorbance was measured (K. Asahina, A. Kambegawa and T. Higashi: Development of a Microtiter Plate Enzyme-linked Immunosorbent Assay for 17α, 20β, 21-trihydroxy-4-pregnen-3-one, a Teleost Gonadal Steroid. Fisheries Science 61, 491-494, 1995).

### Example 1

### Stress reaction of bluefin tuna to light and color of water tank wall and bottom surfaces-1

In order to reveal a cause of cannibalism, fright behavior and collision death, juvenile tuna were placed in various water tanks with different combinations of illumination and colors, respectively, and examined fright behavior rates, survival rates, cortisol levels as the hormone showing a stress state of fish, and the like to study the influence of illumination, the color of a water tank, brightness, reflected light, and the like.

### Method

Three test groups were provided. Each group included three set of nine 30 L-transparent polycarbonate water tanks, each of which was equipped with doubled transparent, white or black polystyrene bags set on the wall and bottom surfaces thereof. For each tank, lighting was conducted at the illumination of water surface area of 25, 250 or 2,500 lx with white fluorescent light sources. Juvenile bluefin tuna of 40 days after hatching were placed in each water tank and determined an abnormal swimming rate, a percent of sunken fish, mortality, a survival rate and a cortisol level in the whole fish body after 3 hours.

### Results

Table 1 shows the influence of the color of water tank wall surface on an abnormal swimming rate, a percent of sunken fish, mortality and a cortisol level in the whole fish body of juvenile bluefin tuna.

**Table 1**

| Water tank color | Illumination | Abnormal swimming rate (%) | Percent of sunken fish (%) | Mortality (%) | Survival rate (%) | Cortisol level (ng/g) |
|---|---|---|---|---|---|---|
| Transparent | low | 0 | 0 | 0 | 100 | 20.4 ± 28.1 |
| Transparent | medium | 16.7 | 0 | 0 | 100 | 21.9 ± 7.7 |
| Transparent | high | 16.7 | 0 | 0 | 100 | 40.6 ± 62.0 |
| White | low | 66.7 | 16.7 | 16.7 | 83.3 | 109.5 ± 104.5 |
| White | medium | 60.0 | 16.7 | 16.7 | 83.3 | 31.2 ± 2.6 |
| White | high | 100 | 16.7 | 16.7 | 83.3 | 138.9 ± 39.6 |
| Black | low | 0 | 0 | 0 | 100 | 60.1 ± 52.2 |
| Black | medium | 20.0 | 16.7 | 16.7 | 83.3 | 124.6 ± 151.5 |
| Black | high | 80.0 | 16.7 | 16.7 | 83.3 | 71.2 ± 87.9 |

As seen form Table 1, the average occurrence rate of fright behavior of the fish placed in the white water tanks was 60% or more at any illumination, and at 2,500 lx or lower, it reached at 100%. In addition, the survival rate after 3 hours was 83.3% at any illumination. The cortisol level in the whole fish body was extremely high as compared with that of the transparent water tanks.

Although the average occurrence rate of fright behavior of the fish placed in the black water tanks was 0% at 25 lx, it was raised to 80% as increased in illumination. In addition, the survival rate after 3 hours was 83.3% with the illumination of 250 lx or more.

On the other hand, the fright behavior rate, the mortality and the cortisol level of the fish placed in the transparent water tanks were low without any significant fluctuation from the beginning.

It has been also found that to reduce illumination temporarily to about several hundred lx or lower is one of effective means for alleviating visual stimuli due to a colored tank in case of transportation with a small scale tank or a temporary keeping.

### Example 2

### Stress reaction of bluefin tuna to light and color of water tank wall and bottom surfaces-2

In order to reveal a cause of cannibalism, fright behavior and collision death, juvenile tuna were placed in various water tanks with different combinations of illumination and colors, respectively, and examined fright behavior rates, survival rates, cortisol levels as the hormone showing a stress state of fish, and the like to study the influence of illumination, the color of a water tank, brightness, reflected light, and the like.

### Method

Five test groups were provided. Each group included three sets of a 10 L-plastic transparent water tank as a control group, the same water tank equipped with a black vinyl sheet set on the inside or the outside wall and bottom surfaces thereof, the same water tank equipped with a black vinyl sheet set on the inside wall and bottom surfaces and further equipped with a transparent vinyl sheet set thereon, and the same water tank equipped with an aluminum sheet set on the inside wall and bottom surfaces. Juvenile bluefin tuna of 40 days after hatching were placed in each water tank. After 3 hours under lighting at illumination of the water surface area of 5,000 lx, the fluctuation in an abnormal swimming rate, a percent of sunken fish, mortality, etc. of the juvenile bluefin tuna were observed. Water was not present at all between the vinyl sheets, or between the vinyl sheet and the water tank wall and surfaces.

### Results

Table 2 shows the influence of reflected light on an abnormal swimming rate, a percent of sunken fish, and mortality of juvenile bluefin tuna.

**Table 2**

| | Transparent water tank | Black sheet interior lining | Black sheet exterior lining | Black sheet interior lining + transparent sheet interior lining | Aluminum sheet interior lining |
|---|---|---|---|---|---|
| | Mean±SD | Mean±SD | Mean±SD | Mean±SD | Mean±SD |
| Abnormal swimming rate (%) | 20.0±0.0 | 86.7±11.5 | 0.0±0.0 | 6.7±11.5 | 100.0±0.0 |
| Percent of sunken fish (%) (%) | 3.7±6.4 | 53.3±30.6 | 0.0±0.0 | 3.6±6.3 | 80.0±0.0 |
| Mortality (%) | 3.7±6.4 | 53.3±30.6 | 0.0±0.0 | 3.6±6.3 | 80.0±0.0 |

As seen from Table 2, for the water tanks equipped with black vinyl sheets or aluminum sheets set on the wall and bottom surfaces, almost 100% fright behavior and high mortality were observed in all of the water tanks. On the other hand, remarkable fright behavior or death was not observed for the fish in the transparent water tanks and the water tanks equipped with transparent vinyl sheets set on the inside the black vinyl sheets. In addition, it was also found that the influence was more significant in a smaller water tank such as the 10 L-water tank of Example 2 than the 30 L-water tank of Example 1. This shows that the distance between the fish and the water tank wall surface or bottom surface is one of important factors.

### Example 3

### Stress reaction of bluefin tuna to light and color of water tank wall and bottom surfaces-3

In order to develop a method for preventing the occurrence of abnormal behavior such as fright behavior and the collision death, buffering equipment for alleviating visual stimuli was used for examining its effect.

### Method

Two groups were provided. Each group included three sets of six 1.6 t-water tanks each of which equipped with a transparent vinyl sheet set on the inside wall and bottom surfaces of the tank. In three tanks out of these 6 water tanks, as a test group, sea water was poured into only the inside the transparent vinyl sheets of the tanks, and transparent buffering materials having air encapsulated portions were placed between the vinyl sheets and the wall and bottom surfaces of the tanks. In the remaining three tanks, as a control group, sea water was poured into the inside the transparent vinyl sheets as well as between the sheets and the wall and bottom surfaces of the tanks. In the water tank in which sea water was introduced both inside and outside the vinyl sheet, the color of the water tank wall and bottom surfaces was recognized by viewing from any directions. On the other hand, in the water tank equipped with the buffering material set between the vinyl sheets and the water tank, the color was not recognized because the insides of the tank was reflected by viewing from diagonal directions. In each water tank, young adult bluefin tuna of about 300 g average body weight were placed and reared for 3 days with running water to observe the fluctuation in fright behavior of the fish, a survival rate, or the like.

### Results

Table 3 shows the influence of the treatment of the water tank wall surface on mortality and a plasma cortisol level of young adult bluefin tuna.

**Table 3**

| | Control group (water present outside vinyl sheet) | Test group (air encapsulated buffering material, water absent outside vinyl sheet) |
|---|---|---|
| Survival rate (%) | 33.3 ± 33.3 | 77.8 ± 38.5 |
| Plasma cortisol level (ng/ml) | 203.9 ± 274.4 | 130.1 ± 116.4 |

As seen form Table 3, the mortality of the fish in the water tanks with sea water introduced both inside and outside the transparent vinyl sheet was significantly higher than that of the water tank containing the air encapsulated buffering material. In addition, the plasma cortisol level was increased as well.

### Example 4

### Influence of color of water tank and addition of nanochloropsis on survival rate and stress reaction of juvenile tuna

In order to develop a method for preventing the occurrence of abnormal behavior such as fright behavior and the collision death, a buffering material for alleviating visual stimuli was placed in a water tank and examined its effect.

### Method

Juvenile bluefin tuna (27-days old) were placed in a 2 L-white water tank and a stainless steel basket, respectively, for examining the difference in percents of sunken fish and survival rates with or without addition of nanochloropsis to the rearing water. The illumination was 2,000 to 2,500 lx, and the concentration of the nanochloropsis added was about 5,000,000 cells/ml.

### Results

Table 4 shows the survival rate and the percent of sunken fish of each test group.

**Table 4**

| | Percent of sunken fish (%) | Survival rate (%) |
|---|---|---|
| White water tank group | 76.2 ± 8.2 | 0 ± 0 |
| 1 group + nanochloropsis 5,000,000 cells/ml | 14.3 ± 0.0 | 57.1 ± 14.3 |
| Stainless steel basket water tank group | 9.5 ± 16.5 | 66.7 ± 8.25 |
| 3 group + nanochloropsis 5,000,000 cells/ml | 0 ± 0 | 66.7 ± 8.25 |

As seen from Table 4, in the white water tank, the survival rate was extremely low and the percent of sunken fish (%) was high, they were significantly improved by the addition of nanochloropsis.

In the stainless steel basket, while the increase in the turn over was observed, it was also improved by the addition of nanochloropsis.

### Example 5

### Influence of the difference in transportation methods on survival rate of young adult bluefin tuna

It is known that a large number of fish die during transportation of living bluefin tuna using a vehicle. Then, a colored water tank equipped with a multiple-layer transparent vinyl sheet set on the wall and bottom surfaces of the tank was used to study its alleviating effect.

### Method

Young adult bluefin tuna (45-days old with the average body length of 12.5 cm, 150 fish) were placed in water tanks of 3 test groups, respectively. The water tank of test group No. 1 was a 1 t-FRP colored water tank. The water tanks of test group Nos. 2 and 3 were the same water tank equipped with double transparent vinyl sheets set on the colored water tank wall and bottom surfaces, and the same water tank as that of test group No. 2 with 1,000 lx lighting, respectively. After fish were placed in the tanks, they were transported from the Oshima Experiment Station of Fisheries Laboratory of Kinki University to Shirahama Fish Nursery Center. It took about 2 hours over land. After the transportation, they were placed in 20 t concrete water tanks, respectively, for examining the fluctuation in the survival rate. At the time of loading and unloading, the fish were collected with a 0.2 mm size net and moved with a transparent vinyl sheet.

Test groups are shown in Table 5.

**Table 5**

| | Test group No. | Sheet setting | Water tank | Light |
|---|---|---|---|---|
| 1 | Control group | None | Blue water tank, fluorescent lamp 10w x 1 set OFF | Absent |
| 2 | Test group 1 | Vinyl sheet double group | Blue water tank, fluorescent lamp 10w x 1 set OFF | Absent |
| 3 | Test group 2 | Vinyl sheet double group | Blue water tank, fluorescent lamp 20w x 1 set ON | Present |

### Results

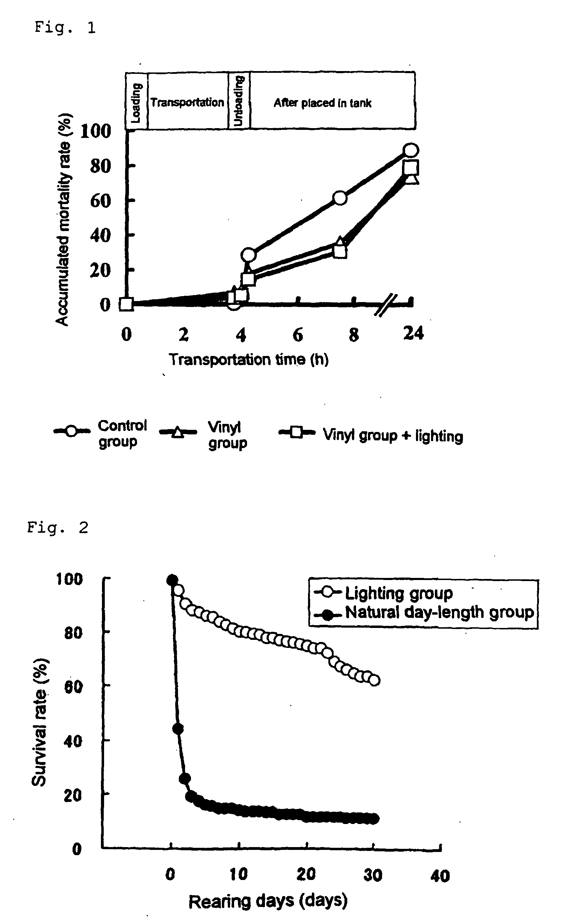

The results are shown in Fig. 1.

As seen from Fig. 1, no significant fluctuation in mortality was observed during the transportation. In addition, no difference was observed between the presence and absence of lighting in the fish of the vinyl sheet setting groups. The bluefin tuna in the control group showed a significant panic behavior when the fish were exposed to sunshine after arrival and unloading, thereby increasing the number of dead fish rapidly, while no significant fluctuation was observed in the vinyl sheet setting groups. After the fish were placed in the concrete tank, the increase in the number of dead fish was observed due to the injury by handling at the time of loading and unloading.

In view of the above results, the setting of the multiple layer transparent vinyl sheets has been confirmed to have an effect for alleviating fright and panic behavior-death due to light at the time of, and before and after transportation of fish, and therefore is a useful and effective transportation means.

### Example 6

### Influence of color of water tank and addition of chlorella on survival rate and stress reaction of juvenile tuna

Light was suddenly irradiated to juvenile bluefin tuna to study behavior, a survival rate and a degree of stress. Further, the influence of color of a water tank and the addition of nanochloropsis at the time of irradiation of light was studied.

### Method

Three test groups were provided. Juvenile bluefin tuna (27-days old) were placed in a 10 L transparent water tank, a silver water tank equipped with an aluminum sheet set on transparent tank wall and bottom surfaces, and a silver water tank containing nanochloropsis added in the rearing water, respectively. The fluctuation in an abnormal swimming rate and a survival rate of the fish was examined with varying illumination at the water surface area from 300 lx to 100,000 lx using a halogen. Light was irradiated for 10 minutes, and the concentration of the nanochloropsis added was 5,000,000 cells/ml.

### Results

Table 6 shows the influence of color of the water tank and light on a survival rate and an abnormal swimming rate of the juveniles.

**Table 6**

| Water tank condition | Abnormal swimming rate (%) | Survival rate (%) |
|---|---|---|
| Transparent | 3.3 ± 5.8 | 100 ± 0 |
| Silver | 33.3 ± 41.6 | 73.3 ± 46.2 |
| Silver + nanochloropsis (5,000,000 cells/ml) | 0 ± 0 | 100 ± 0 |

| | | |
|---|---|---|
| Illumination: 100,000 lx | | |

As seen from Table 6, no significant fluctuation was observed in the abnormal swimming rate and the survival rate of the fish in the control group using the transparent water tank, while, in the case that tank wall and bottom surfaces were silver, significant panic behavior was observed, thereby lowering the survival rate. However, when nanochloropsis was added, there was no influence of light irradiation even in the silver water tank.

### Example 7

### Stress reaction of juvenile tuna to size of colored substance

It was found that juvenile and young adult bluefin tuna show panic reaction due to brightness and color of a water tank. Then, the following study was conducted for examining whether the reaction depended on the size or the pattern of a substance.

### Method

Five test groups were provided. The water tanks used for respective test groups were a 10 L transparent water tank, a water tank equipped with a silver stainless steel sheet attached to the entire surfaces of a transparent water tank, and water tanks equipped with different silver stainless steel sheet pieces in the shape of discs of 1.25 cm, 2.5 cm and 5 cm diameters attached on transparent water tank wall surfaces, respectively. The number of the silver stainless steel sheet pieces to be attached was adjusted with respect to each test group so that the total area of the stainless steel sheet pieces of the 1.25 cm group (silver disc small), the 2.5 cm group (silver disc middle), and 5 cm group (silver disc large) were the same. Each test group included 4 water tanks, i.e., in all, 20 water tanks were used. These water tanks were placed in a water bath with lighting at illumination of 5,000 lx. Juvenile bluefin tuna (30-days old) were placed therein and the behavior of fish and the fluctuation in a survival rate, etc. were examined for 6 hours.

### Results

The results are shown in Table 7.

**Table 7**

| Water tank color | Transparent | Silver | Silver disc large | Silver disc middle | Silver disc small |
|---|---|---|---|---|---|
| Survival rate | 81.0 ± 21.8 | 50.0 ± 27.4 | 0 ± 0 | 21.4 ± 25.8 | 28.6 ± 28.6 |

As seen from Table 7, while the reaction to color of the water tank wall surface was low for the transparent wall, it became high for the silver wall. Further, the influence was more significant in case that a pattern was formed as compared with an entirely colored surface without formation of a pattern. Furthermore, the influence was more significant in a larger size patter as long as the patter was recognizable. Namely, it was found that, when a substance larger than the body length of tuna, such as a colored substance or a substance reflecting light of 5 cm diameter or more was set, tuna of about 3 cm body length could clearly recognized an object, thereby causing abnormal behavior more frequently. Many migration fish in the ocean have body side surfaces colored in silver, white, or the like. Then, there is a high possibility that tuna would recognize the colored substance having substantially the same size as themselves or larger as a predator or enemy, but could not escape therefrom, thereby causing abnormal behavior. It has been shown that, when a reflection plate, a colored substance, or the like is set on the wall and the bottom surfaces of a large scale water tank, or the like, it stimulates tuna to take avoidance action.

### Example 8

### Influence of various drawings set on water tank wall surface on abnormal behavior of tuna

As mentioned above, it was found that tuna showed a panic reaction quite frequently, when a colored substance was present in a short distance, and that the influence of the substance was more significant, when the substance has a clearer shape. Then, in this experiment, the influence of various drawings set on the wall surfaces of water tanks on abnormal behavior of bluefin tuna was studied, and the influence by the difference in shapes of drawings was examined.

### Method

Juvenile tuna of 24 days after hatching were placed in 10 L transparent water tanks in which white seals in the shape of circular, triangular, square, longitudinally extended rectangular and laterally extended rectangular each having the same area were attached on the wall surfaces, respectively to examine the behavior and a survival rate of the fish after 24 hours. For each shape of the seal, 4 tanks were provided and 5 fish were placed in each tank. As a control, 10L transparent water tanks having no seal were used.

### Results

Table 8 shows the influence of the pattern of the water tank wall surface on behavior and a survival rate of the tuna.

**Table 8**

| Drawing | Normal swimming rate (%) | Survival rate (%) |
|---|---|---|
| Transparent water tank | 100 | 100 |
| Circular | 60 | 80 |
| Triangular | 60 | 90 |
| Square | 70 | 80 |
| Longitudinally extended rectangular | 60 | 80 |
| Laterally extended rectangular | 70 | 95 |

The normal swimming rate and the survival rate of the fish in all the 10 L transparent water tanks (control) were 100%. However, the fish in the transparent water tanks to which the various drawing seals were attached showed low normal swimming rate and survival rate. In addition, no significant difference depending upon the difference in the shapes of drawings was observed. Thus, it was shown that tuna react to patterns present in a short distance and that the shape of a pattern did not participate therein.

### Example 9

### Effect of avoidance-pattern substance set on water tank wall surface on prevention of the occurrence of abnormal death of tuna

From Example 8, it was found that tuna reacted to patterns present in a short distance, and that its shape did not participate therein. Then, the prevention of the occurrence of the collision death was expected by attaching a circular or lattice-shaped seal as an avoidance-pattern on a 30 t large scale water tank so that tuna prevented from approaching to the wall surface of the water tank.

### Method

Juvenile tuna of 31 days after hatching (310 fish) were placed in a 30 t water tank with a circular or lattice-shaped seal as an avoidance-pattern substance attached on the wall to examine a rearing survival rate of 7 days and compare it with that of a control group having no shaped seal. As the circular seal, that having a 5 cm radium, and as the lattice-shaped seal, a 5 cm width white tape were used and they were attached to the walls at the same intervals, respectively. For respective test groups, two tanks were provided.

### Results

Table 9 shows the influence of the pattern attached to the wall surface of the water tank on a rearing survival rate of the bluefin tuna.

**Table 9**

| Test group | | Survival rate (%) |
|---|---|---|
| Control group | Water tank 1 | 47 |
| | Water tank 2 | 59 |
| Circular pattern group | Water tank 1 | 62 |
| | Water tank 2 | 65 |
| Lattice pattern group | Water tank 1 | 65 |
| | Water tank 2 | 72 |

The survival rate in the control group was as low as about 50%. On the other hand, in two test groups wherein avoidance-pattern substances were attached, values higher than those of the control group were obtained regardless of the shape of circular or lattice, and the similar effects were observed in the two test groups. Thus, it was confirmed that setting of an avoidance-pattern substance alleviated abnormal death such as collision death.

### Example 10

### Effect of rearing with lighting on the prevention of the occurrence of abnormal death of bluefin tuna

In the production of tuna, in many cases, a large amount of fish die within several days immediately after moving and placing artificially produced juveniles or natural juveniles in a net cage from a water tank on shore or a ship. In addition, in case of using a small size net cage with a side length of 16 m or less, tuna is liable to die. In order to reveal the effect of rearing with lighting of a net cage on the prevention of the occurrence of abnormal death of bluefin tuna, fish were reared in net cages different in lighting conditions to examine survival rates, or the like.

### Method

Juvenile tuna of 38 days after hatching were placed in a net cage of a side length of 12 m to rear fish in environments different in light and dark conditions to examine survival rates. The test groups included a lighting group with lighting at illumination of a 150 lx or more at the water surface area at night, and a natural day-length group. The net cages of both groups were maintained the same sear area with a slight distance to each other so that the light did not leak to the natural day-length group. The lighting was conducted from the evening to the early morning to ensure that a non-lighting time zone at night was not present.

### Results

The results are shown in Fig. 2.

As seen from Fig. 2, in the natural day-length group, a large amount of death occurred due to collision, contact with the net cage, or the like from one day after placing the fish in the net cage. The survival rate became 40% on the next day, 20% on the third day, and 12% after rearing for about 20 days. On the other hand, the survival rate in the lighting group was as high as 96% on the next day, and a high value of 70% was shown even after rearing for about 20 days. Then, the lighting of the lighting group was turned off, however, no drastic increase in dead of fish was observed. Then, the effect of the rearing with lighting in a short period was confirmed.

### Example 11

### Synergistic effect of avoidance-pattern substance and lighting as a method for preventing the occurrence of abnormal death of tuna

From the above-mentioned examples, it is clear that the setting of an avoidance-pattern substance and rearing with lighting are effective as a method for preventing the occurrence of abnormal death such as the collision death. Then, the effect of combination of both methods was examined.

### Method

Juvenile tune 31 days after hatching (310 fish) were places in water tanks of a 30 t water tank control group, a lattice pattern group where a lattice pattern seal attached as an avoidance-pattern substance to the same water tank as that of the control group, and a lattice pattern and lighting group where the same water tank as that of the lattice pattern group was used, and lighting was conducted at night, respectively. A rearing survival rate of each tank was examined for 7 days. As the lattice shaped seal, a 5 cm width white tape was used and they were attached on the water tank like at the same intervals.

### Results

Table 10 shows a synergistic effect of the patter on the water tank wall surface and lighting on a rearing survival rate of bluefin tuna.

**Table 10**

| Test group | Survival rate (%) |
|---|---|
| Control group | 53 |
| Lattice pattern | 69 |
| Lattice pattern + lighting at night | 80 |

The survival rate of the 7th day was lowest in the control group, and it became high in the lattice pattern group. Further, the survival rate of the lattice pattern and lighting group was further higher, and it was 80%. Thus, it was found that the sight field of tuna to the wall became clear by setting a substance having a size and color to be sufficiently recognizable by the tuna on a water tank, and further applying lighting, thereby reducing a large amount of death due to collision or contact.

### Example 12

Effect of avoidance-pattern substance set on net cage on the prevention of the occurrence of abnormal death of bluefin tuna

In the production of tuna, in many cases, a large amount of fish die within several days immediately after moving and placing artificially produced juveniles or natural juveniles in a net cage from a water tank on shore or a ship. In addition, in case of using a small size net cage with a side length of 16 m or less, tuna is liable to die due to collision and contact with the net. As mentioned above, it was found that tuna showed avoidance reaction and fright reaction to a larger substance present in a short distance. Further, it was confirmed that the occurrence of abnormal death could be effectively prevented by setting such substance on wall surfaces of a water tank on shore. Then, the effect of setting an avoidance-pattern on the net wall of a net cage on the prevention of abnormal death of tuna was examined.

### Method

Juvenile tuna of 33 days after hatching were placed in a net cage of a side length of 12 m and setting an avoidance-pattern substance to examine a survival rate. Namely, in the net cage of the test group, a plurality of a white vinyl cloth of about 10 cm width and about 4 m length as the avoidance-pattern material were attached in the vertical directions at several tens cm intervals on the net and lighting at night was conducted to compare the survival rate with that of a control group having no avoidance-pattern substance for 40 days.

### Results

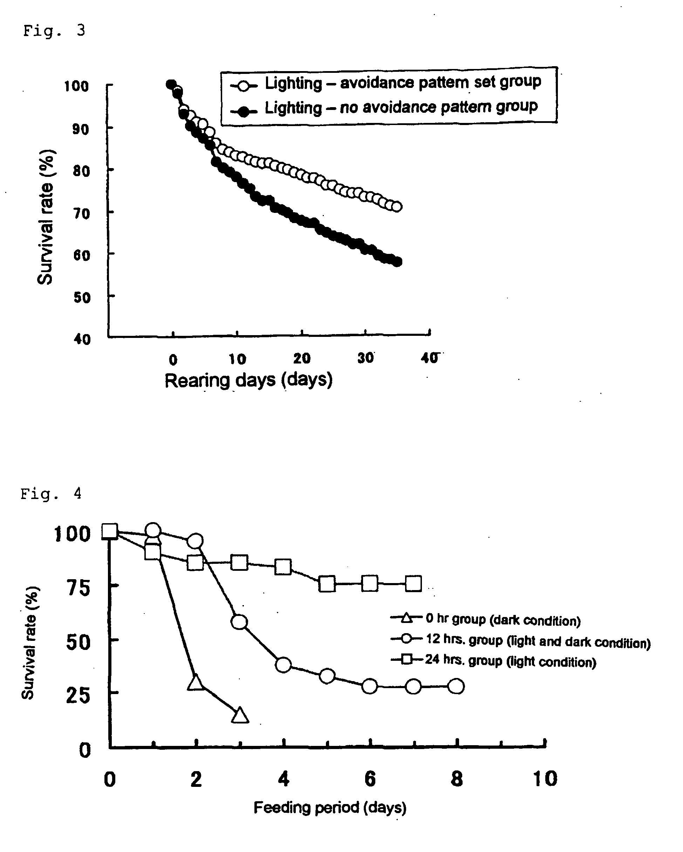

The results are shown in Fig. 3.

In the avoidance-pattern substance set group, a high survival rate was shown from the next day after the fish were placed in the net cage, and a high value of 70% or more was shown even on the 35th day of rearing. On the other hand, the fish survival rate of the group having no avoidance-pattern substance was gradually lowered as compared with the avoidance-pattern substance set group and became about 50% on the 35th day of rearing. Then, it was found that a large amount of death of fish by collision or contact could be reduced by setting a substance having a size and color to be sufficiently recognizable by tuna on a net cage. In addition, it was confirmed that the effect of the avoidance-pattern substance could be enhanced together with lighting at night.

### Example 13

### Influence of a light and dark cycle on collision death of bluefin tuna

In order to clarify the influence of a light and dark cycle on mortality of tuna, fish were reared in rearing environments of different day-length times to examine survival rates, or the like. In addition, the occurrence of collision was assessed by X-rays of fish after rearing for a certain period of time.

### Method

Juvenile tuna of about 30 days after hatching were placed in 3 t water tanks with different light and dark cycles to examining rearing survival rates for 7 days. Each water tank had lighting of a 150 lx at the water surface area and a shading sheet for shading external light. Three test groups were provided, i.e., a 24 hrs. group, wherein lighting was continued for 24 hours, a 12 hrs. group, wherein lighting was continued for 12 hours and light was shaded for 12 hours, and 0 hour group, wherein light was shaded for 24 hours. At the end of this rearing test, the fish were taken up for taking X-rays,

The results are shown in Fig. 4.

As for the fish survival rate after rearing for 7 days, a value as high as 80% was shown in the 24 hrs. group, however, the 12 hrs. and O hr. groups showed values as low as 30% and 15%, respectively. In addition, fracture due to collision with wall and bottom surfaces of the net cage was confirmed by X-rays of dead fish.

### Example 14

### Proper illumination for prevention the occurrence of collision death of bluefin tuna

In order to reveal the influence of a light and dark cycle and rearing lighting on mortality of tuna, fish were reared in rearing environments of different illumination under 24 hour lighting conditions to examine survival rates, or the like. In addition, the occurrence of collision was assessed by X-rays of fish after rearing for a certain period of time.

### Method

Juvenile tuna of about 40 days after hatching were placed in 3 t water tanks with different illumination under the 24 hour lighting conditions to examine rearing survival rates for 7 days. In test groups, illumination was adjusted to 15, 150 and 1,500 lx at the water surface areas, respectively. In each tank, 40 fish were placed and dead fish were observed every day. At the end of the rearing test, the fish were taken up for taking X rays.

### Results

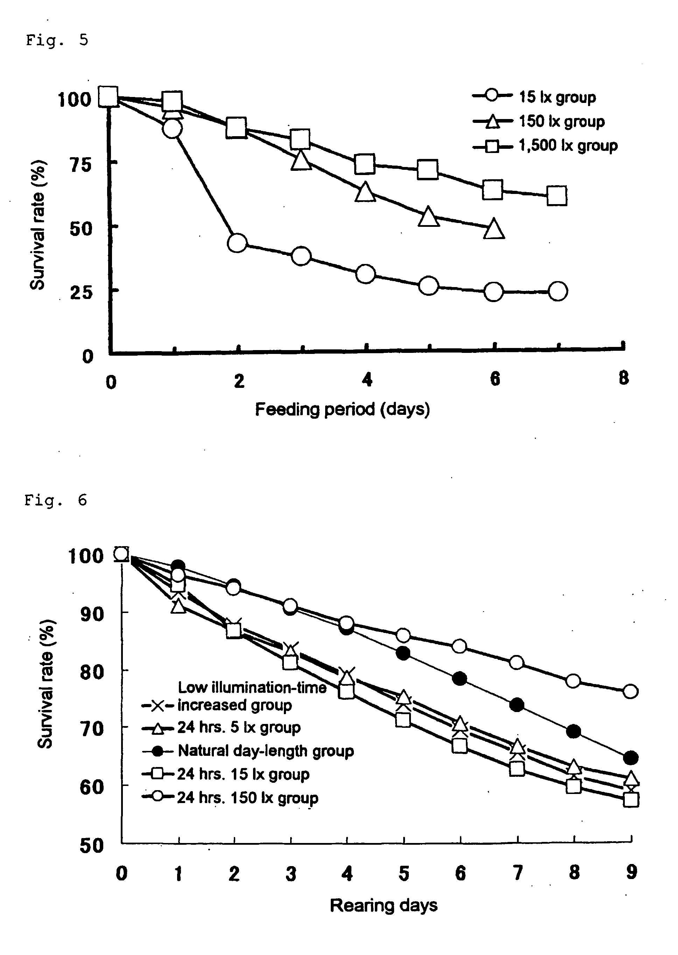

The results are shown in Fig. 5.

The fish survival rate after rearing 7 days was as low as about 20% in the 15 lx group, however, those of the 150 and 1,500 lx groups were as high as 60% or more. In addition, fracture due to collision with wall and bottom surfaces of the net cage was confirmed by X-rays of dead fish.

### Example 15

### Effect of lighting on rearing survival rate of bluefin tuna

In order to reveal the effect of lighting at night on the rearing survival rate in the tuna production, fish were reared in rearing environments different in day-length time and illumination to examine survival rates, or the like. Further, the occurrence of collision was assessed by X-rays of fish after rearing for a certain period of time. Furthermore, a stress state was judged from a stress hormone level of fish.

### Method

Juvenile tuna of about 50 days after hatching were placed in 30 t production water tanks with light shading sheets and they were reared under conditions of different light and dark cycles and illumination to examine survival rates. Test groups included a 24 hrs. 150 lx group, wherein lighting at the illumination of 150 lx at the water surface area was continued for 24 hours, a 24 hrs. 15 lx group, wherein lighting at the illumination of 15 lx at the water surface area was continued for 24 hours, and a 24 hrs. 5 lx group, wherein lighting at the illumination of 5 lx at the water surface area was continued for 24 hours. They were compared with a natural day-length group. In addition, a low illumination period-increasing group was also provided, wherein lighting was conducted little by little from 2 hours before the sunrise so as to prolong a period of 0 lx to 15 lx, thereby examining the influence of a prolonged low illumination period. After several hours from the sunrise, illumination of every water tank became 1,000 lx or more due to sunshine, and therefore the same illumination conditions were employed during the day time.

Each test group had 2 water tanks. At the end of test, the fish were taken up for taking X-rays. Further, some of fish were supplied for measuring plasma cortisol levels.

### Results

The results are shown in Table 11 and Fig. 6. Table 11 shows the influence of rearing with lighting on plasma cortisol levels of bluefin tuna.

**Table 11**

| | Low illumination period-increasing group | Natural day-length group | 24 hrs. 5 lx group | 24 hrs. 15 lx group | 24 hrs. 150 lx group |
|---|---|---|---|---|---|
| Plasma cortisol level (ng/ml) | 26.5 ± 40.0 | 31.3 ± 41.7 | 22.1 ± 32.6 | 30.8 ± 53.7 | 18.4 ± 28.0 |

The average survival rate of the fish after rearing for 9 days was 64.3% in the natural day-length group, while it was 60.9% for the 24 hrs. 5 lx group, 57.2% for the 24 hrs. 15 lx, and 58.9% for the low illumination-period increasing group, which were lower than that of the natural day-length group. On the other hand, in the 24 hrs. 150 lx group, a significantly high value of 75.8% was obtained. Further, no significant difference in the plasma cortisol levels of tuna in respective test groups was observed, but the level tended to be lowered in the 24 hrs. 15 lx group. Two water tanks of respective test groups showed similar tendency.

The rearing method under 24 hours lighting conditions of about 150 lx or more does not apply much stress to tuna and therefore is very effective for improving a survival rate at the time of growout culture or transportation in a period liable to occur collision death. Further, since a survival rate is lowered under elongated low illumination conditions of less than about 150 lx, it has been shown that a survival rate can be increased by shortening the period of about 15 lx to 150 lx with lighting even under the natural day-length with sunshine.

### Industrial Applicability

As described hereinabove, according to the present invention, there is provided a method for preventing the occurrence of abnormal behavior such as cannibalism, fright behavior and collision death during rearing, storage and transportation of tuna of juvenile and young adult fish stages, particularly, of those periods in the seed production.

## Claims

1. A method for preventing the occurrence of fright behavior or collision death of tuna in juvenile or young adult fish stage during rearing, storage or transportation which comprises rearing, storing or transporting the tuna in juvenile or young adult fish stage in a visual stimulus-alleviating environment, wherein the alleviation of visual stimuli is conducted by means of (a) setting a visual stimulus-buffering material through which light transmits partially in both straight and diagonal directions, (b) maintaining the tuna in the presence of colored fine particles in the environment, (c) controlling the fluctuation in illumination of the environment, wherein the illumination of the environment is maintained at least about 150 lx, or a combination thereof.

2. The method according to claim 1, wherein the visual stimulus-buffering material of the means (a) is a transparent buffering material with one or a plurality of air encapsulated portions.

3. The method according to claim 2, wherein the transparent buffering material is set on the tank wall and/or bottom surfaces of a rearing water tank.

4. The method according to claim 1, wherein fresh water chlorella or nanochloropsis is introduced into the environment in the means (b).

5. A method for preventing the occurrence of collision death of tuna in juvenile or young adult fish stage during rearing, storage or transportation which comprises rearing, storing or transporting the tuna in juvenile or young adult fish stage in a visual stimulus-controlling environment, wherein the control of visual stimuli is conducted by means of setting a light reflection plate stimulating the visual sense of the tuna on the surfaces of a rearing water tank wall, a net cage wall or an obstacle.

## Patentansprüche

1. Verfahren zur Vorbeugung des Auftretens von Angstverhalten oder Kollisionstod bei Thunfischen im juvenilen oder jung-erwachsenen Fisch-Stadium während der Aufzucht, Aufbewahrung oder des Transports, umfassend die Aufzucht, Aufbewahrung oder den Transport des Thunfisches im juvenilen oder jung-erwachsenen Fisch-Stadium in einer visuellen Reiz-verringernden Umwelt, wobei die Verringerung der visuellen Reize bewerkstelligt wird mithilfe des (a) Einsetzens eines visuellen Reiz puffernden Materials, durch das Licht partiell sowohl in gerader als auch in diagonaler Richtung durchdringen kann, (b) Haltens des Thunfisches in der Gegenwart von gefärbten Feinpartikein in der Umwelt, (c) Kontrollierens der Fluktuation in der Beleuchtung der Umwelt, wobei die Beleuchtung der Umwelt mit mindestens etwa 150 lx aufrechterhalten wird, oder einer Kombination davon.

2. Verfahren nach Anspruch 1, wobei das visuellen Reiz puffernde Material des Mittels (a) ein transparentes Puffermaterial ist mit einem oder einer Vielzahl von lufteinschließenden Bereichen.

3. Verfahren nach Anspruch 2, wobei das transparente Puffermaterial an der Tankwand und/oder an der Oberfläche des Bodens eines Zuchtwassertanks aufgebracht ist.

4. Verfahren nach Anspruch 1, wobei Frischwasser-Chlorella oder Nanochloropsis in die Umwelt in Mittel (b) eingeführt wird.

5. Verfahren zur Vorbeugung des Auftretens von Kollisionstod bei Thunfischen im juvenilen oder jung-erwachsenen Fisch-Stadium während der Aufzucht, Aufbewahrung oder des Transports, umfassend die Aufzucht, Aufbewahrung oder den Transport des Thunfisches im juvenilen oder jung-erwachsenen Fisch-Stadium in einer visuellen Reiz kontrollierenden Umwelt, wobei die Kontrolle der visuellen Reize bewerkstelligt wird durch das Einrichten einer lichtreflektierenden Platte auf den Oberflächen einer Wand eines Zuchtwassertanks, einer Netzkäfigwand oder eines Hindernisses, die den visuellen Sinn des Thunfisches stimuliert.

## Revendications

1. Procédé pour empêcher l'occurrence d'un comportement de frayeur ou le décès par collision des thons à l'état juvénile ou de jeune adulte, pendant l'élevage, le stockage ou le transport qui comprend les étapes consistant à élever, stocker ou transporter le thon à l'état juvénile ou de jeune adulte dans un environnement réduisant le stimulus visuel, dans lequel la réduction des stimuli visuels est réalisée par (a) placement d'un matériau protégeant contre un stimulus visuel à travers lequel la lumière passe partiellement à la fois dans les directions droite et en diagonale, (b) maintien du thon en présence de fines particules colorées dans l'environnement, (c) contrôle de la fluctuation de l'éclairage de l'environnement, dans lequel l'éclairage de l'environnement est maintenu au moins à environ 150 lx ou leur combinaison.

2. Procédé selon la revendication 1, dans lequel le matériau protégeant contre un stimulus visuel à l'étape (a) est un matériau de protection transparent avec une ou une pluralité de parties d'air encapsulé.

3. Procédé selon la revendication 2, dans lequel le matériau de protection transparent est placé sur les surfaces de paroi et/ou de fond de réservoir d'un réservoir d'eau d'élevage.

4. Procédé selon la revendication 1, dans lequel on introduit de la chlorelle ou de la nannochloropsis d'eau douce dans l'environnement à l'étape (b).

5. Procédé pour empêcher l'occurrence d'un décès par collision des thons à l'état juvénile ou de jeune adulte pendant l'élevage, le stockage ou le transport qui comprend les étapes consistant à élever, stocker ou transporter le thon à l'état juvénile ou de jeune adulte dans un environnement de contrôle de stimulus visuel dans lequel le contrôle des stimuli visuel est réalisé par le placement d'une plaque de réflexion de lumière stimulant le sens visuel du thon sur les surfaces d'une paroi de réservoir d'eau d'élevage, une paroi de cage grillagée ou un obstacle.
